**Europäisches Patentamt**

**European Patent Office**

**Office européen des brevets**

(19)

(11) Veröffentlichungsnummer: **0 119 402 B1**

# EUROPÄISCHE PATENTSCHRIFT

(12)

(45) Veröffentlichungstag der Patentschrift:
**22.03.89**

(51) Int. Cl.⁴: **B 07 C 3/08**, B 65 G 47/50

(21) Anmeldenummer: **84100627.3**

(22) Anmeldetag: **21.01.84**

(54) **Verfahren zur Erkennung und Identifikation von Gegenständen.**

(30) Priorität: **23.02.83 DE 3306175**

(43) Veröffentlichungstag der Anmeldung:
**26.09.84 Patentblatt 84/39**

(45) Bekanntmachung des Hinweises auf die Patenterteilung:
**22.03.89 Patentblatt 89/12**

(84) Benannte Vertragsstaaten:
**BE DE FR GB LU NL**

(56) Entgegenhaltungen:
**DE-A- 1 456 753**
**DE-C- 899 174**
**GB-A- 473 996**
**US-A- 3 738 475**
**US-A- 3 814 521**

(73) Patentinhaber: **Licentia Patent-Verwaltungs-GmbH, Theodor-Stern-Kai 1, D-6000 Frankfurt/Main 70 (DE)**

(72) Erfinder: **Müller, Ernst-August, Dr.-Ing., Osdorfer Weg 89, D-2000 Hamburg 52 (DE)**

(74) Vertreter: **Lertes, Kurt, Dr. et al, Licentia Patent-Verwaltungs-GmbH Theodor-Stern-Kai 1, D-6000 Frankfurt/M 70 (DE)**

**Beschreibung**

Die Erfindung betrifft ein Verfahren gemäß dem Oberbegriff von Anspruch 1.

Es ist bereits ein Verfahren der im Oberbegriff des Anspruchs 1 genannten Art vorgeschlagen worden, bei dem von dem optoelektronischen Sensor ein auflösungsbegrenztes grobes Abbild des Gegenstandes hergestellt wird. Das grobe Abbild des Gegenstandes wird mit einem vorgegebenen Referenzbild in der Auswerteeinrichtung verglichen, von der ein Signal bereitgestellt wird, das ein Maß der Übereinstimmung zwischen grobem Abbild und vorgegebenem Referenzbild darstellt (DE-Patentanmeldung P 32 39 938.3).

Bei dem vorgeschlagenen Verfahren werden die Gegenstände auf einem Transportband mit einer Geschwindigkeit von ca. 1 m/s an dem optoelektronischen Sensor vorbeigeführt, wobei das Transportband beispielsweise eine Vielzahl von nebeneinanderliegenden Förderrollen aufweisen kann. Hierbei ergeben sich eine Reihe von Problemen, die insbesondere bei Gegenständen wie Zeitungen und Zeitschriften zum Tragen kommen. Zu nennen ist z.B. das sogenannte Zeitschriftenflattern, das bei verhältnismäßig hohen, zur Erzielung eines großen Durchsatzes erforderlichen Transportgeschwindigkeiten besonders stark ausgeprägt ist. Weiterhin können die Gegenstände teilweise oder vollständig übereinanderliegen bzw. unausgerichtet transportiert werden. Hinzu kommt, daß bei einer Aussortierung, d.h. einer Ausschleusung einzelner Gegenstände, Behinderungen infolge von Staubildungen auftreten können.

Es ist eine optische Einrichtung zur Durchführung eines Verfahrens zum Wiedererkennen von dreidimensionalen Objekten bekannt geworden (US-A-38 14 521). Zur Erzeugung von Videodaten, die mit Referenzdaten für Objekterkennungszwecke verglichen werden sollen, wird ein Muster von beleuchteten und unbeleuchteten Flächen auf das Objekt geworfen. Das Objekt wird dann entlang einer Vielzahl von aufeinanderfolgenden Abtastlinien abgetastet. Mit dieser bekannten Einrichtung ist somit das Erkennen und die Identifikation von Gegenständen in einer Lesestation, deren Ergebnisse an eine Auswerteeinrichtung weitergegeben werden, möglich, jedoch kann keine kommissionsspezifische Erfassung und Sortierung von von zwei oder mehreren Einlegestationen stammenden Gegenständen durchgeführt werden. Dieses trifft auch für eine weitere bekannte Sortiervorrichtung zu (vgl. US-A 37 38 475), bei der zur Herkunftsbestimmung von Gegenständen u.a. ein Fördersystem in Form eines durch Querrippen unterteilten Transportbandes vorgesehen ist. Durch Einlegen in jeweils einen gekennzeichneten Abschnitt zwischen zwei Querrippen werden die zu erkennenden Gegenstände vereinzelt, wodurch die eingangs beschriebene kommissionsspezifische Erfassung und Sortierung von Gegenständen nicht ermöglicht wird.

Weiterhin ist eine Einrichtung zum Sortieren von Gegenständen, vorzugsweise für Postpakete und nach ihrem Bestimmungsort bekannt (DE-A-14 56 753). Die Einrichtung besteht aus einer Reihe von Abladetoren und aus einer Fördereinrichtung, die die zu sortierenden Gegenstände an den Abladetoren vorbeitransportiert, aus weiterhin mindestens einer Gruppe von Sammelförderern, die entlang der Reihe von Abladetoren im Abstand voneinander, mit ihrer Längsachse quer zu der Abladetorreihe angeordnet sind, und aus einer Einrichtung zum Öffnen und Schließen der Abladetore. Die den Sammelförderern zugeordneten Abladetore sind in ein Tor, das einem der Sammelförderer allein zugeordnet ist, und mindestens ein anderes Tor, das diesem Sammelförderer und zugleich dem nächst benachbarten zugeordnet ist, unterteilt. Hierbei kann die Fördereinrichtung ein geneigtes Förderband sein, dem die Abladetore so zugeordnet sind, daß sie die Abladung auf Sammelbänder, die das geneigte Förderband kreuzen, durch Herabgleiten gestatten.

Der Erfindung liegt daher die Aufgabe zugrunde, ein Verfahren vorzuschlagen, mit dem ein großer Durchsatz von Gegenständen, ein einwandfreies Sortieren der Gegenstände sowie ein Auseinanderhalten von mehreren Kommissionen ermöglicht wird, d.h. es soll z.B. auch festgestellt werden, von welchem Rücklieferer Gegenstände einer bestimmten Kommission stammen, damit diesem Rücklieferer diese Gegenstände gutgeschrieben werden können.

Die Aufgabe wird erfindungsgemäß durch die Verfahrensmerkmale von Anspruch 1 gelöst.

Erfindungsgemäße Ausgestaltungen des Verfahrens sind in den Unteransprüchen 2 und 3 beschrieben.

Ein Vorteil der Erfindung liegt in der Ausbaufähigkeit des Verfahrens durch Erhöhung der Zahl der Ausschleusestationen. Die Abschnitte der Endlostransporteinrichtung werden vorteilhafterweise optimal genutzt.

In der Zeichnung ist ein Ausführungsbeispiel einer Vorrichtung zur Durchführung des erfindungsgemäßen Verfahrens dargestellt, und zwar zeigen:

Figur 1 eine Gesamtvorrichtung, und

Figur 2 eine Seitenansicht des Transportbandes mit Anschlagkante und Betätigungseinrichtung.

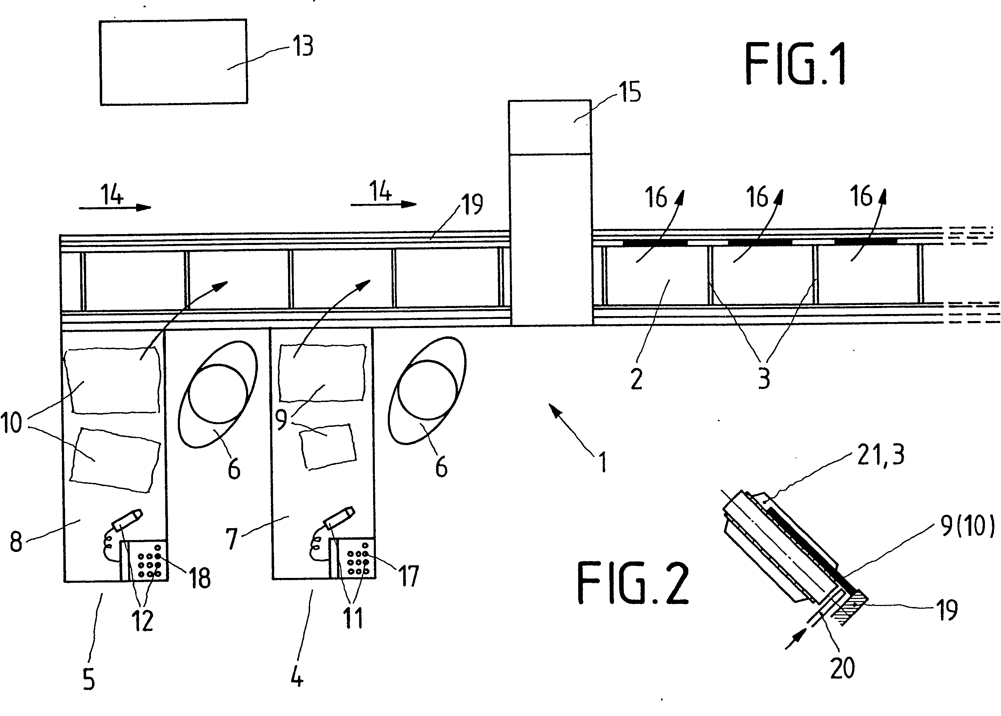

In Figur 1 besteht eine Endlostransporteinrichtung 1 aus einem Gurtförderer, dessen Transportband 2 durch Querrippen 3 in Abschnitte eingeteilt ist, mit einer, zwei oder mehreren Einlegestationen 4 oder 5. Diese Einlegestationen können manuell, d.h. mit Hilfe einer als Aufleger wirkenden menschlichen Arbeitskraft 6 betrieben werden.

Jede Einlegestation 4 bzw. 5 weist einen Tisch 7 oder 8, der als Ablage für die zu identifizierenden Gegenstände 9 oder 10 dient, und eine Einrichtung zur kommissionsweisen Herkunftserkennung 11 oder 12 auf. Die zuletzt genannten Einrichtungen bestehen aus einer Eingabetastatur und/oder einem Balkencodeleser und sind an eine Auswerteeinrichtung 13 angeschlossen. Nach ihrer Herkunftsbestimmung werden die Gegenstände 9 oder 10 durch die Aufleger 6 von den Tischen 7 und 8 nacheinander heruntergenommen und entsprechend den nicht bezeichneten Pfeilen in jeweils eine, an den Auflegern 6, in Richtung des Pfeiles 14 vorbeitransportierten Abschnitten des Transportbandes 2 eingelegt. Die Abschnitte sind derart gekennzeichnet, beispielsweise durch Ziffern oder Farbmarkierungen, daß sichergestellt wird, daß jeder Aufleger 6 eine bestimmte Sorte von gekennzeichneten Abschnitten zu füllen hat.

Über der Endlostransporteinrichtung 1 ist direkt hinter den Einlegestationen 4 und 5 eine Lesestation 15 angeordnet. Die Lesestation weist einen zeichnerisch nicht dargestellten optoelektronischen Sensor auf, der nach dem Prinzip der Grauwertmustererkennung arbeiten kann, wobei das aktuelle Bildmuster eines Gegenstandes 9 oder 10 mit eingelernten Referenzmustern verglichen wird. Die Erkennungs- bzw. Identifikationsergebnisse der Gegenstände liefert die Lesestation 15 an die Auswerteeinrichtung 13.

Der Lesestation 15 ist eine Reihe von Ausschleusestationen 16 nachgeordnet, von denen vier Stück dargestellt sind. Die Ausschleusestationen 16 werden in Abhängigkeit von den Leseergebnissen der Lesestation 15 von der Auswerteeinrichtung 13 gesteuert.

Mit der in Figur 1 dargestellten Vorrichtung werden Gegenstände auf folgende Weise erkannt und identifiziert:

Vor dem Aufbringen der Gegenstände 9 bzw. 10 durch die Aufleger 6 auf das Transportband 2 der Endlostransporteinrichtung 1 wird mittels der Einrichtungen zur Herkunftserkennung 11 und 12 die Herkunft der Gegenstände 9 und 10 festgestellt und z.B. über eine Tastatur 17 bzw. 18 der Auswerteeinrichtung 13 mitgeteilt. Anschließend werden die Gegenstände 9 und 10 durch Einlegearbeiten der Aufleger 6 in jeweils einen gekennzeichneten Abschnitt der Endlostransporteinrichtung 1 vereinzelt. In ihren zugeordneten Abschnitten werden die Gegenstände 9 und 10 in eine ausgerichtete Schräglage gebracht, in der sie unter den optoelektronischen Sensoren der Lesestation 15 vorbeigeführt werden. In der Lesestation 15 werden die Gegenstände 9 bzw. 10 erkannt und identifiziert, wobei die gewonnenen Ergebnisse an die Auswerteeinrichtung 13 weitergegeben werden. Abschließend werden die Gegenstände 9 bzw. 10 in den Ausschleusestationen 16 den Abschnitten nach Sortiergesichtspunkten automatisch entnommen.

Die Teilansicht gemäß Figur 2 weist ein die Gegenstände 9 bzw. 10 aufnehmendes Transportband 2 auf, das auf der Endlostransporteinrichtung 1 derart schräg angeordnet ist, das sich der in den durch Querrippen 3 getrennten Abschnitten befindliche Gegenstand 9 bzw. 10 an einer Anschlagkante 19 selbsttätig ausrichtet. Hierbei kann es sich z.B. um eine als Gleitschiene oder als Rollenbahn ausgebildete Anschlagkante 19 handeln. Die Anschlagkante 19 wirkt in einer vorgegebenen Ausschleuseposition mit einer Betätigungseinrichtung 20 derart zusammen, daß bei Aktivierung der Betätigungseinrichtung 20 die Gegenstände 9 oder 10 über die Anschlagkante hinweggeschoben werden und aufgrund ihrer Schwerkraft selbsttätig aus den Abschnitten herausfallen. Hierbei kann eine elektromechanische Betätigungseinrichtung mit geringer Masse verwendet werden, die schnell betätigt werden kann.

Die Querrippen 3 weisen eine zur Transportrichtung der Endlostransporteinrichtung 1 senkrecht stehende Wandung 21 auf. Durch diese Wandung wird trotz hoher Transportgeschwindigkeiten das eingangs beschriebene Zeitschriftenflattern vermieden.

Die Vorrichtung zur Durchführung des Verfahrens kann auf vorteilhafte Weise durch zwei oder mehrere nebeneinanderliegende Endlostransporteinrichtungen 1 vervielfältigt werden, da die Ausschleusestationen paralleler Vorrichtungen auf gemeinsame Ziele, beispielsweise Auffangbehälter oder abführende Transportbänder für die aussortierten Gegenstände, wirken können.

Bezugszeichenliste

1 Endlostransporteinrichtung
2 Transportband
3 Querrippen
4 }
5 } Einlegestationen
6 Aufleger
7 }
8 } Tische
9 }
10 } Gegenstände
11 }
12 } Einrichtungen zur Herkunftserkennung
13 Auswerteeinrichtung
14 Pfeile
15 Lesestation
16 Ausschleusestationen
17 }
18 } Eingabetastaturen
19 Anschlagkante
20 Betätigungseinrichtung
21 Wandung/Querrippe

**Patentansprüche**

1. Verfahren zur Erkennung und Identifikation von Gegenständen (9, 10), insbesondere von Zeitungen, Zeitschriften, Büchern, Kartons, Schachteln oder dergleichen, unter Verwendung einer einen optoelektronischen Sensor aufweisenden Lesestation (15), einer Auswerteeinrichtung (13) und einer die Gegenstände (9, 10) unter dem optoelektronischen Sensor der Lesestation (15) vorbeiführenden mit zwei Einlegestationen (4, 5) ausgerüsteten Endlostransporteinrichtung (1), bei welchem Verfahren die Herkunft der Gegenstände (9, 10) vor dem Aufbringen auf das durch Querrippen (3) unterteilte Transportband (2) der Endlostransporteinrichtung (1) festgestellt und über eine Eingabetastatur (17 bzw. 18) der Auswerteeinrichtung (13) mitgeteilt wird, die Gegenstände (9, 10) durch Einlegen in jeweils einen gekennzeichneten Abschnitt zwischen zwei Querrippen (3) vereinzelt werden, zur Auseinanderhaltung mehrerer Kommissionen die Gegenstände (9, 10) stets nur in Abschnitten zwischen den Querrippen (3) mit zugeordneter Kennzeichnung eingelegt werden, die Gegenstände (9, 10) in ihren zugeordneten Abschnitten in eine ausgerichtete Schräglage gebracht werden, in der sie unter dem optoelektronischen Sensor vorbeigeführt werden, die Erkennung und Identifikation der Gegenstände (9, 10) in der Lesestation (15) vorgenommen wird, deren Ergebnisse an die Auswerteeinrichtung (13) weitergegeben werden, und bei dem die Gegenstände (9, 10) in von der Auswerteeinrichtung (13) gesteuerten Ausschleusestationen (16) der Endlostransporteinrichtung (1) den Abschnitten zwischen den Querrippen (3) nach Sortiergesichtspunkten automatisch entnommen werden.

2. Verfahren nach Anspruch 1, dadurch gekennzeichnet, daß die Gegenstände (9, 10) manuell vereinzelt werden.

3. Verfahren nach Anspruch 1, dadurch gekennzeichnet, daß an der Längsseite der Endlostransporteinrichtung (1) angeordnete Ausschleusestationen (16) verwendet werden.

## Claims

1. Method for the recognition and identification of articles (9, 10), in particular of newspapers, journals, books, cartons, boxes or the like, with the use of a reading station (15) displaying an opti-electronic sensor, an evaluating equipment (13) and an endless transport equipment (1), which is equipped with two feeder stations (4, 5) and guides the articles (9, 10) past below the opti-electronic sensor of the reading station (15), in which method the origin of the articles (9, 10) is ascertained before being put onto the transport belt (2), which is subdivided by transverse ribs (3), of the endless transport equipment (1) and communicated by way of an input keyboard (17 or 18) to the evaluating equipment (13), the articles (9, 10) are singled by being laid into a respective characterised section between two transverse ribs (3), the articles (9, 10) are always laid only into sections between the transverse ribs (3) with associated characterisation for keeping several consignments apart, the articles (9, 10) are brought in their allocated sections into an oriented sloping position, in which they are guided past below the opti-electronic sensor, the recognition and identification of the articles (9, 10) is undertaken in the reading station (15) and the results thereof passed on to the evaluating equipment (13), and wherein the articles (9, 10) are removed automatically according to sorting aspects from the sections between the transverse ribs (3) in shunting-out stations (16) of the endless transport equipment (1), which are controlled by the evaluating equipment (13).

2. Method according to claim 1, characterised thereby, that the articles (9, 10) are singled manually.

3. Method according to claim 1, characterised thereby, that shunting-out stations (16) are used, which are arranged at the longitudinal side of the endless transport equipment (1).

## Revendications

1. Procédé de reconnaissance et d'identification d'objets (9, 10), notamment de journaux, périodiques, livres, cartons, boîtes ou similaires, utilisant un poste de lecture (15) présentant un capteur optoélectronique, un dispositif d'exploitation (13) et un dispositif de transport sans fin (1) équipé de deux postes de mise en place (4, 5), faisant passer les objets (9, 10) sous le capteur optoélectronique du poste de lecture (15), procédé dans lequel l'origine des objets (9, 10) est déterminée avant le dépôt sur la bande de transport (2) subdivisée par les nervures transversales (3) et communiquée au dispositif d'exploitation (13) par un clavier d'entrée (17, respectivement 18), les objets (9, 10) étant séparés par mise en place chaque fois dans une section caractérisée entre deux nervures transversales (3), pour discerner plusieurs expéditions, les objets (9, 10) étant toujours uniquement mis en place dans des sections situées entre les nervures transversales (3) et possédant des caractéristiques qui leur sont affectées, les objets (9, 10) étant placés dans les sections qui leur sont affectées dans une position alignée obliquement, dans laquelle ils passent sous le capteur optoélectronique, la reconnaissance et l'identification des objets (9, 10) étant entreprise dans le poste de lecture (15), dont les résultats sont retransmis au dispositif d'exploitation (13), et pour lequel les objets (9, 10) sont automatiquement prélevés des sections situées entre les nervures transversales (3), selon les critères de tri, dans les postes d'éclusage de sortie (16) du dispositif de transport sans fin (1) commandés par le dispositif d'exploitation (13).

2. Procédé selon la revendication 1, caractérisé en ce que les objets (9, 10) sont séparés à la main.

3. Procédé selon la revendication 1, caractérisé en ce que des postes d'éclusage de sortie (16) disposés sur le côté longitudinal du dispositif de transport sans fin (1) sont utilisés.

FIG.1

FIG.2

EP 0 119 402 B1